# EUROPÄISCHE PATENTANMELDUNG

(11) **EP 2 088 654 A2**
(43) Veröffentlichungstag der Anmeldung: **12.08.2009**
(21) Anmeldenummer: 09001239.4
(22) Anmeldetag: 29.01.2009
(51) Int. Cl.: H02G 15/013

(54) **Vorrichtung zur Abdichtung mindestens eines Kabels in einem Kabeleinführungsbereich**

(30) Priorität: 07.02.2008 DE 202008001747 U
(71) Anmelder: CCS Technology, Inc., Wilmington, DE 19803 (US)
(72) Erfinder: Thibault, Simon, 58099 Hagen (DE); Kupczyk, Andreas, 58099 Hagen (DE)
(74) Vertreter: Sturm, Christoph

(57) **Zusammenfassung**

Die Erfindung betrifft eine Vorrichtung (50) zur Abdichtung mindestens eines Kabels in einem Kabeleinführungsbereich, insbesondere einem Kabeleinführungsbereich einer Kabelmuffe oder einer Verteilereinrichtung. Die erfindungsgemäße Vorrichtung (50) umfasst einen wärmeschrumpfbaren Basiskörper (51) und einen hinsichtlich seines Aggregatzustands stabilen Dichtkörper (52), wobei der wärmeschrumpfbare Basiskörper (51) den Dichtkörper (52) beim Schrumpfen verformt und nach dem Schrumpfen in einem verformten Zustand hält.

## Beschreibung

Die Erfindung betrifft eine Vorrichtung zur Abdichtung mindestens eines Kabels in einem Kabeleinführungsbereich, insbesondere einem Kabeleinführungsbereich einer Kabelmuffe oder einer Verteilereinrichtung, nach dem Oberbegriff des Anspruchs 1.

Aus der Praxis ist es bereits bekannt, Kabel wie z. B. Lichtwellenleiterkabel in Kabeleinführungsbereichen einer Kabelmuffe oder einer Verteilereinrichtung abzudichten. Hierzu dienende Vorrichtungen sind in prinzipiell zwei Gruppen zu unterteilen, nämlich erstens in solche Vorrichtungen, die eine rein mechanische Abdichtung der Kabel im jeweiligen Kabeleinführungsbereich gewährleisten, und zweitens in solche Vorrichtungen, die eine Abdichtung der Kabel unter Ausnutzung des Prinzips der Wärmeschrumpfung im jeweiligen Kabeleinführungsbereich realisieren.

Bei der ersten Gruppe von Vorrichtungen, die eine rein mechanische Abdichtung der Kabel im jeweiligen Kabeleinführungsbereich gewährleisten, ist mindestens ein Kabel in einem verformbaren Dichtkörper aus einem elastisch verformbaren Werkstoff aufgenommen, der durch Aufbringen einer mechanischen Kraft, insbesondere einer Federkraft, zur Abdichtung des jeweiligen Kabels verformt wird. Das Federelement hält dabei den verformbaren Dichtkörper in einer dauernden Verformung.

Bei der zweiten Gruppe von Vorrichtungen, die das Prinzip der Wärmeschrumpfung ausnutzen, wird ein wärmeschrumpfbarer Körper mit Hilfe eines Gasbrenners erhitzt, wobei der wärmeschrumpfbare Körper eine wärmeaktivierte, schrumpfbare Flächenschicht und eine ebenfalls wärmeaktivierte, hinsichtlich ihres Aggregatzustands instabile Kleberschicht aufweist. In Folge der Wärmeeinwirkung wird die Flächenschicht des wärmeschrumpfbaren Körpers geschrumpft und die Kleberschicht verflüssigt, wobei nach Ausbleiben der Wärmeeinwirkung die Flächenschicht im geschrumpften Zustand verbleibt und die Kleberschicht wieder in einen festen Aggregatzustand übergeht.

Hiervon ausgehend liegt der vorliegenden Erfindung das Problem zu Grunde, eine neuartige Vorrichtung zur Abdichtung eines Kabels in einem Kabeleinführungsbereich zu schaffen. Dieses Problem wird dadurch gelöst, dass die eingangs genannte Vorrichtung durch die Merkmale des kennzeichnenden Teils des Anspruchs 1 weitergebildet ist. Erfindungsgemäß umfasst die Vorrichtung einen wärmeschrumpfbaren Basiskörper und einen hinsichtlich seines Aggregatzustands stabilen Dichtkörper, wobei der wärmeschrumpfbare Basiskörper den Dichtkörper beim Schrumpfen verformt und nach dem Schrumpfen in einem verformten Zustand hält.

Mit der hier vorliegenden Erfindung wird erstmals eine Vorrichtung zur Abdichtung mindestens eines Kabels in einem Kabeleinführungsbereich vorgeschlagen, die einerseits einen wärmeschrumpfbaren Basiskörper und andererseits einen hinsichtlich seines Aggregatzustands stabilen Dichtkörper umfasst, wobei der wärmeschrumpfbare Basiskörper den Dichtkörper beim Schrumpfen verformt und nach dem Schrumpfen in einem verformten Zustand hält. Bei der erfindungsgemäßen Vorrichtung zum Abdichten mindestens eines Kabels in einem Kabeleinführungsbereich werden demnach die Vorteile von rein mechanisch abdichtenden Vorrichtungen mit den Vorteilen von rein wärmeschrumpfend abdichtenden Vorrichtungen kombiniert, wobei die Nachteile der jeweiligen aus dem Stand der Technik bekannten Vorrichtungen vermieden werden.

So verfügt die erfindungsgemäße Vorrichtung zwar über einen wärmeschrumpfbaren Basiskörper, der wärmeaktiviert ist, auf einen wärmeaktivierten Kleber, der bei Wärmeeinwirkung seinen Aggregatzustand ändert, wird jedoch verzichtet. Vielmehr wird ein Dichtkörper verwendet, der beim Schrumpfen seinen Aggregatzustand beibehält und demnach beim Schrumpfen sowie nach dem Schrumpfen hinsichtlich seines Aggregatzustands stabil ist. Die Kraft zum Verformen dieses Dichtkörpers wird vom wärmeschrumpfbaren Basiskörper bereitgestellt, sodass auf mechanisch wirkende Verformungseinrichtungen wie z. B. Federelemente zur Verformung des hinsichtlich seines Aggregatzustands stabilen Dichtkörper verzichtet werden kann. Mit der hier vorliegenden Erfindung wird demnach eine völlig neuartige Vorrichtung zur Abdichtung mindestens eines Kabels in einem Kabeleinführungsbereich vorgeschlagen.

Nach einer ersten vorteilhaften Weiterbildung der Erfindung nimmt der wärmeschrumpfbare Basiskörper den Dichtkörper in Axialrichtung des Basiskörper gesehen sandwichartig auf, wobei der wärmeschrumpfbare Basiskörper in Axialrichtung schrumpfbar ist und beim Schrumpfen den Dichtkörper derart verformt, dass in Radialrichtung eine Dichtfunktion bereitgestellt wird.

Nach einer zweiten, alternativen vorteilhaften Weiterbildung der Erfindung ist der wärmeschrumpfbare Basiskörper in Radialrichtung desselben gesehen sandwichartig im Dichtkörper aufgenommen, wobei der wärmeschrumpfbare Basiskörper in Axialrichtung und/oder Radialrichtung schrumpfbar ist und beim Schrumpfen den Dichtkörper derart verformt, dass in Radialrichtung eine Dichtfunktion bereitgestellt wird.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. In der Zeichnung zeigt:
- Fig. 1:: eine perspektivische Darstellung einer erfindungsgemäßen Vorrichtung zur Abdichtung eines Kabels in einem Kabeleinführungsbereich in einem ersten Zustand derselben;
- Fig. 2:: einen Querschnitt durch die Vorrichtung der Fig. 1;
- Fig. 3:: die Vorrichtung der Fig. 1 in einem zweiten Zustand derselben;
- Fig. 4:: einen Querschnitt durch die Vorrichtung der Fig. 2;
- Fig. 5:: eine perspektivische Darstellung einer alternativen erfindungsgemäßen Vorrichtung zur Abdichtung eines Kabels in einem Kabeleinführungsbereich in einem ersten Zustand derselben;
- Fig. 6:: einen Querschnitt durch die Vorrichtung der Fig. 5;
- Fig. 7:: die Vorrichtung der Fig. 5 in einem zweiten Zustand derselben;
- Fig. 8:: einen Querschnitt durch die Vorrichtung der Fig. 7;
- Fig. 9:: eine perspektivische Darstellung einer weiteren alternativen erfindungsgemäßen Vorrichtung zur Abdichtung eines Kabels in einem Kabeleinführungsbereich in einem ersten Zustand derselben;
- Fig. 10:: einen Querschnitt durch die Vorrichtung der Fig. 9;
- Fig. 11:: die Vorrichtung der Fig. 9 in einem zweiten Zustand derselben;
- Fig. 12:: einen Querschnitt durch die Vorrichtung der Fig. 11;
- Fig. 13:: eine perspektivische Explosionsdarstellung einer weiteren alternativen erfindungsgemäßen Vorrichtung zur Abdichtung eines Kabels in einem.

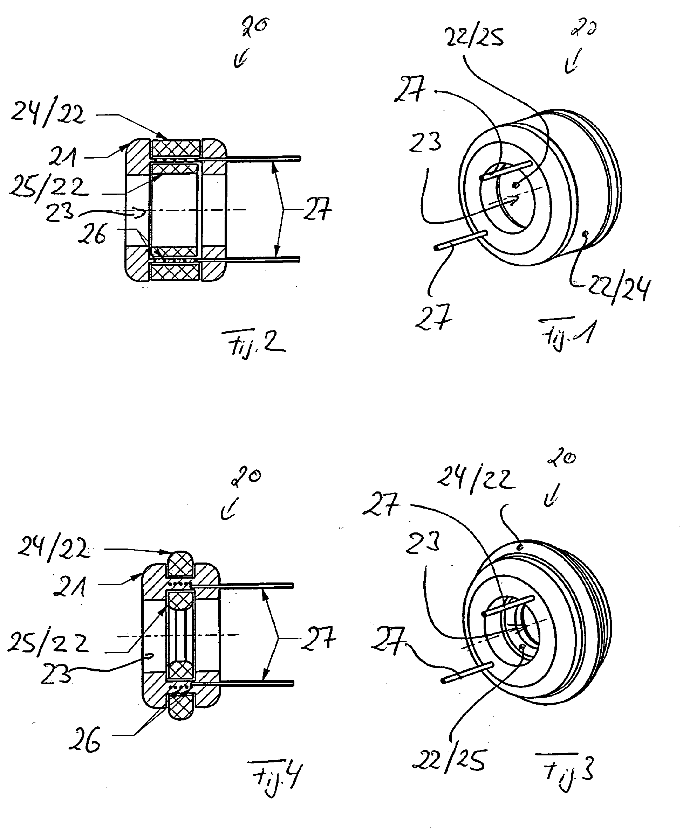

Fig. 1 bis 4 zeigen ein erstes Ausführungsbeispiel einer erfindungsgemäßen Vorrichtung 20 zur Abdichtung eines Kabels in einem Kabeleinführungsbereich, insbesondere einem Kabeleinführungsbereich einer Kabelmuffe oder einer Verteilereinrichtung. Die in Fig. 1 bis 4 gezeigte Vorrichtung 20 dient dabei der Abdichtung eines einzigen Kabels in einem Kabeleinführungsbereich.

Die erfindungsgemäße Vorrichtung 20 weist einen wärmeschrumpfbaren Basiskörper 21 und einen hinsichtlich seines Aggregatzustands stabilen Dichtkörper 22 auf.

Der wärmeschrumpfbare Basiskörper 21 sowie der hinsichtlich seines Aggregatzustands stabile Dichtkörper 22 weisen jeweils eine zentrale Ausnehmung 23 auf, in die das abzudichtende Kabel einführbar ist. Der wärmeschrumpfbare Basiskörper 21 nimmt den hinsichtlich seines Aggregatzustands stabilen Dichtkörper 22 in Axialrichtung des Basiskörpers 21 bzw. der Vorrichtung 20 gesehen sandwichartig auf, wobei hierzu der wärmeschrumpfbare Basiskörper 21 radial außen und radial innen über eine Nut verfügt, in die Hälften 24, 25 des hinsichtlich seines Aggregatzustands stabilen Dichtkörpers 22 eingesetzt sind.

Der wärmeschrumpfbare Basiskörper 22 ist durch Anlegen einer Wärmeeinwirkung in Axialrichtung schrumpfbar, wobei der Basiskörper 22 beim Schrumpfen den Dichtkörper 22, nämlich die beiden Hälften 24 und 25 desselben, ausgehend von dem in Fig. 1, 2 gezeigten Zustand in den in Fig. 3, 4 gezeigten Zustand verformt und nach dem Schrumpfen in diesem verformten Zustand hält, wobei der Dichtkörper 22 dann in Radialrichtung eine Dichtfunktion bereitstellt, nämlich derart, dass die Hälfte 24 des Dichtkörpers 22 nach radial außen und die Hälfte 25 des Dichtkörpers 22 nach radial innen dichtet.

Wie Fig. 2, 4 entnommen werden kann, ist in den wärmeschrumpfbaren Basiskörper 21 in einem Abschnitt, der zwischen den beiden Nuten zur Aufnahme der Hälften 24, 25 des Dichtkörpers 22 positioniert ist, ein Heizwiderstand 26 integriert, an den über elektrische Leiter 27 eine elektrische Spannung angelegt werden kann, um so die zum Schrumpfen des Basiskörpers 21 benötigte Wärmeeinwirkung bereitzustellen.

Im Ausführungsbeispiel der Fig. 1 bis 4 schrumpft demnach bei Wärmeeinwirkung der Basiskörper 22 in Axialrichtung, wobei hierbei der hinsichtlich seines Aggregatzustands stabile Dichtkörper 22 axial zusammengedrückt wird und so nach radial innen und nach radial außen eine Dichtwirkung bzw. Dichtfunktion bereitstellt.

Der hinsichtlich seines Aggregatzustands stabile Dichtkörper 22 ist aus einem elastisch verformbaren Werkstoff oder einem plastisch-elastisch verformbaren Werkstoff oder einem plastisch verformbaren Werkstoff hergestellt, wobei jedoch entscheidend ist, dass derselbe beim Schrumpfen und nach dem Schrumpfen seinen Aggregatzustand beibehält. Es erfolgt demnach keine Verflüssigung des Dichtkörpers 22 beim Schrumpfen des Basiskörpers 21.

Vorzugsweise ist der Dichtkörper 22 aus einem im Wesentlichen elastisch verformbaren Werkstoff wie z. B. einem Elastomer hergestellt. Besonders bevorzugt ist der Dichtkörper 22 aus einem Polyurethangel oder einem Silikongel gefertigt.

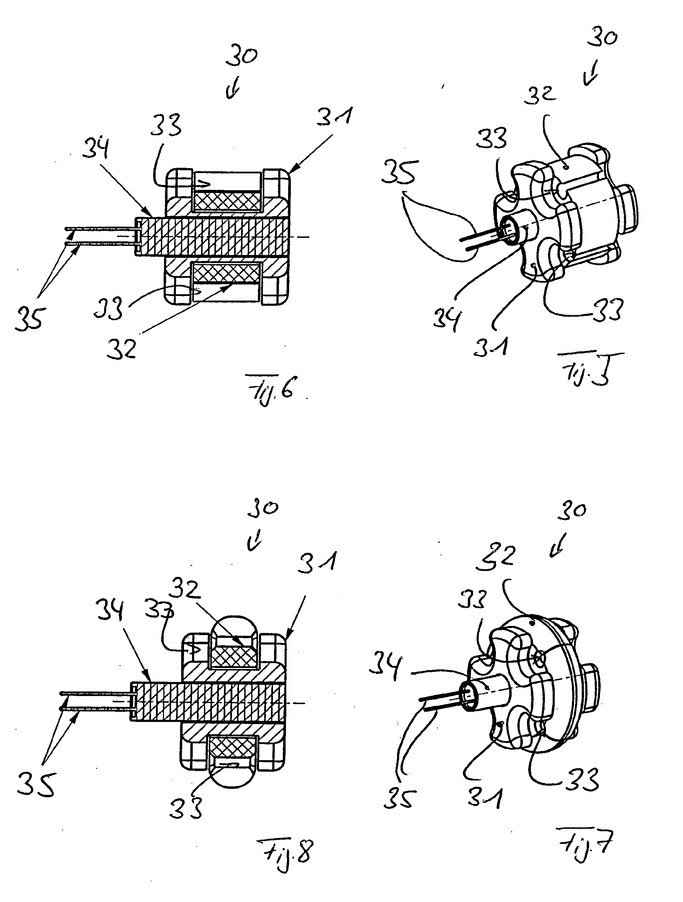

Ein zweites Ausführungsbeispiel einer erfindungsgemäßen Vorrichtung 30 zeigen Fig. 5 bis 8, wobei die Vorrichtung 30 der Fig. 5 bis 8 dem Abdichten mehrerer Kabel in einem Kabeleinführungsbereich dient.

Die Vorrichtung 30 der Fig. 5 bis 8 verfügt ebenso wie die Vorrichtung 20 der Fig. 1 bis 4 über einen wärmeschrumpfbaren Basiskörper 31 und einen hinsichtlich seines Aggregatzustands stabilen Dichtkörper 32. Der wärmeschrumpfbare Basiskörper 31 verformt den hinsichtlich seines Aggregatzustands stabilen Dichtkörper 32 beim Schrumpfen ausgehend von dem in Fig. 5, 6 gezeigten Zustand in den in Fig. 7, 8 gezeigten Zustand und hält nach dem Schrumpfen denselben im verformten Zustand.

Im Ausführungsbeispiel der Fig. 5 bis 8 ist der hinsichtlich seines Aggregatzustands stabile Dichtkörper 32 in einer äußeren Nut des wärmeschrumpfbaren Basiskörpers 31 aufgenommen, wobei radial außen am Umfang des Basiskörpers 31 sowie des Dichtkörpers 32 im gezeigten Ausführungsbeispiel vier Ausnehmungen 33 zur Aufnahme, Führung und Abdichtung jeweils eines Kabels ausgebildet sind.

Auch im Ausführungsbeispiel der Fig. 5 bis 8 nimmt der wärmeschrumpfbare Basiskörper 31 den hinsichtlich seines Aggregatzustands stabilen Dichtkörper 32 in Axialrichtung gesehen sandwichartig auf, wobei der wärmeschrumpfbare Basiskörper 31 durch Wärmeeinwirkung in Axialrichtung schrumpfbar ist und beim Schrumpfen den Dichtkörper 32 derart verformt, dass derselbe in Radialrichtung eine Dichtfunktion bereitstellt. Im Ausführungsbeispiel der Fig. 5 bis 8 wird eine Dichtfunktion nach radial außen bereitgestellt.

Dem wärmeschrumpfbaren Basiskörper 31 ist in einem zentralen Abschnitt, also radial innen, ein Heizelement 34 zugeordnet, welches der Bereitstellung der Wärmeeinwirkung zum Schrumpfen des Basiskörpers 31 dient, wobei an das Heizelement 34 über elektrische Leiter 35 eine elektrische Spannung zur Ausbildung der zum Schrumpfen benötigten Wärmeleistung angelegt werden kann. Die Schrumpfung des wärmeschrumpfbaren Basiskörpers erfolgt im Ausführungsbeispiel der Fig. 5 bis 8 ebenso wie im Ausführungsbeispiel der Fig. 1 bis 4 in Axialrichtung, um so über den hinsichtlich seines Aggregatzustands stabilen Dichtkörper eine Dichtfunktion in Radialrichtung bereitzustellen.

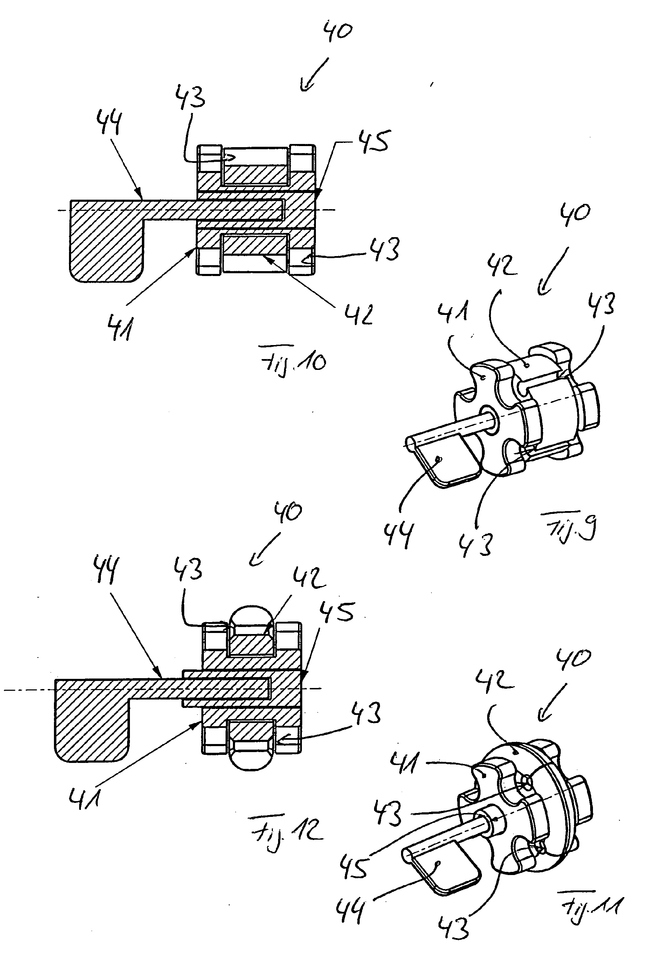

Ein weiteres Ausführungsbeispiel einer erfindungsgemäßen Vorrichtung 40 zur Abdichtung mehrerer Kabel in einem Kabeleinführungsbereich zeigen Fig. 9 bis 12, wobei auch in Fig. 9 bis 12 die Vorrichtung 40 wiederum einen wärmeschrumpfbaren Basiskörper 41 und einen hinsichtlich seines Aggregatzustands stabilen Dichtkörper 42 umfasst, wobei der wärmeschrumpfbare Basiskörper 41 den Dichtkörper 42 beim Schrumpfen verformt und nach dem Schrumpfen in dem verformten Zustand hält.

Dabei nimmt der wärmeschrumpfbare Basiskörper 41 den hinsichtlich seines Aggregatzustands stabilen Dichtkörper 42 in Axialrichtung gesehen wiederum sandwichförmig auf, wobei der wärmeschrumpfbare Basiskörper 41 unter Wärmeeinwirkung in Axialrichtung schrumpfbar ist und beim Schrumpfen den Dichtkörper ausgehend von dem in Fig. 9, 10 gezeigten Zustand in den in Fig. 11, 12 gezeigten Zustand verformt.

Nach dem Schrumpfen hält der wärmeschrumpfbare Basiskörper 41 den hinsichtlich seines Aggregatzustands stabilen Dichtkörper 42in diesem verformten Zustand, sodass in Radialrichtung eine Dichtfunktion bereitgestellt wird, nämlich in Übereinstimmung zum Ausführungsbeispiel der Fig. 5 bis 8 nach radial außen. Dabei sind radial außen am Umfang des wärmeschrumpfbaren Basiskörpers 41 und des hinsichtlich seines Aggregatzustands stabilen Dichtkörpers 42 wiederum mehrere Ausnehmungen 43 zur Aufnahme, Führung und Abdichtung jeweils eines Kabels ausgebildet.

Das Ausführungsbeispiel der Fig. 9 bis 12 unterscheidet sich vom Ausführungsbeispiel der Fig. 5 bis 8 dadurch, dass im Ausführungsbeispiel der Fig. 9 bis 12 der Wärmeeintrag in den wärmeschrumpfbaren Basiskörper 41 zum Schrumpfen desselben über einen Wärmeleiter 44 erfolgt, der mit einem dem Basiskörper 41 zugeordneten Wärmespeicher 45 zusammenwirkt. Bei dem Wärmeleiter 44 kann es sich z. B. um einen elektrischen Lötkolben handeln.

Den drei Ausführungsbeispielen der Fig. 1 bis 12 ist demnach gemeinsam, dass der wärmeschrumpfbare Basiskörper den hinsichtlich seines Aggregatzustands stabilen Dichtkörper in Axialrichtung gesehen sandwichartig aufnimmt, wobei eine Schrumpfung des Basiskörpers in Axialrichtung erfolgt, um den hinsichtlich seines Aggregatzustands stabilen Dichtkörper zu verformen und so in Radialrichtung eine Dichtfunktion bereitzustellen. Der hinsichtlich seines Aggregatzustands stabile Dichtkörper kann jeweils, wie im Zusammenhang mit dem Ausführungsbeispiel der Fig. 1 bis 4 beschrieben, ausgebildet sein.

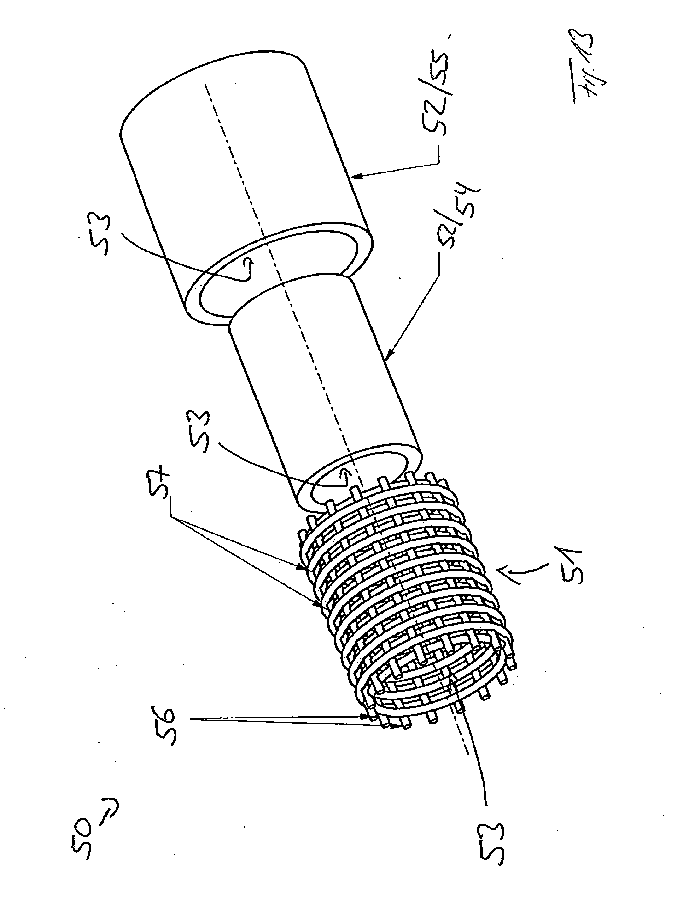

Ein weiteres Ausführungsbeispiel einer erfindungsgemäßen Vorrichtung 50 zur Abdichtung eines Kabels in einem Kabeleinführungsbereich zeigt Fig. 13, wobei das Ausführungsbeispiel der Fig. 13 der Abdichtung eines einzigen Kabels in dem jeweiligen Kabeleinführungsbereich dient.

Die Vorrichtung 50 der Fig. 13 verfügt wiederum über einen wärmeschrumpfbaren Basiskörper 51 und einen hinsichtlich seines Aggregatzustands stabilen Dichtkörper 52, wobei der wärmeschrumpfbare Basiskörper 51 durch Wärmeeinwirkung schrumpfbar ist und hierbei den hinsichtlich seines Aggregatzustands stabilen Dichtkörper 52 beim Schrumpfen verformt und nach dem Schrumpfen in dem verformten Zustand hält. Zur Aufnahme des abzudichtenden Kabels ist sowohl in den Basiskörper 51 als auch in den Dichtkörper 52 eine zentrale Ausnehmung 53 eingebracht.

Im Ausführungsbeispiel der Fig. 13 ist der wärmeschrumpfbare Basiskörper 51 in Radialrichtung desselben gesehen sandwichartig im hinsichtlich seines Aggregatzustands stabilen Dichtkörper 52 aufgenommen, nämlich zwischen einer radial inneren Hälfte 54 und einer radial äußeren Hälfte 55 des Dichtkörpers 52. Die beiden Hälften 54 und 55 des Dichtkörpers 52 können miteinander verbunden sein.

Der wärmerückstellbare Basiskörper 51 verfügt im gezeigten Ausführungsbeispiel über sich in Axialrichtung erstreckende, schrumpfbare Fasern 56 sowie sich in Umfangsrichtung erstreckende Heizelemente 57, um die zum Schrumpfen des Basiskörpers 51 benötigte Wärmeeinwirkung bereitzustellen. Im Ausführungsbeispiel der Fig. 13 erfolgt demnach ein Schrumpfen des Basiskörpers 51 in Axialrichtung durch die Fasern 56, wobei bei einem solchen Schrumpfen in Axialrichtung eine Dichtwirkung nach radial außen und radial innen bereitgestellt wird.

Im Unterschied zum Ausführungsbeispiel der Fig. 13 können sich die schrumpfbaren Fasern auch in Umfangsrichtung und die Heizelemente in Axialrichtung erstrecken, wobei dann ein Schrumpfen des Basiskörpers 51 in Radialrichtung erfolgt und die Dichtfunktion nach radial innen bereitgestellt wird. Auch ist es möglich, dass sich schrumpfbare Fasern in Umfangsrichtung und in Axialrichtung erstrecken, um so ein Schrumpfen des Basiskörpers 51 in Axialrichtung und Radialrichtung bereitzustellen.

Auch im Ausführungsbeispiel der Fig. 13 ist der hinsichtlich seines Aggregatzustands stabile Dichtkörper 52 aus einem elastisch verformbaren Werkstoff oder einem plastisch-elastisch verformbaren Werkstoff oder einem plastisch verformbaren Werkstoff hergestellt. Vorzugsweise besteht der Dichtkörper aus einem vorwiegend elastisch verformbaren Werkstoff, nämlich aus einem Elastomer. Besonders bevorzugt ist der Dichtkörper 52 aus Polyurethangel oder Silikongel gefertigt.

### Bezugszeichenliste

- 20: Vorrichtung
- 21: Basiskörper
- 22: Dichtkörper
- 23: Ausnehmung
- 24: Hälfte
- 25: Hälfte
- 26: Heizwiderstand
- 27: Leiter
- 30: Vorrichtung
- 31: Basiskörper
- 32: Dichtkörper
- 33: Ausnehmung
- 34: Heizelement
- 35: Leiter
- 40: Vorrichtung
- 41: Basiskörper
- 42: Dichtkörper
- 43: Ausnehmung
- 44: Wärmeleiter
- 45: Wärmespeicher
- 50: Vorrichtung
- 51: Basiskörper
- 52: Dichtkörper
- 53: Ausnehmung
- 54: Hälfte
- 55: Hälfte
- 56: Fasern
- 57: Heizelemente

## Patentansprüche

1. Vorrichtung zur Abdichtung mindestens eines Kabels in einem Kabeleinführungsbereich, insbesondere einem Kabeleinführungsbereich einer Kabelmuffe oder einer Verteilereinrichtung, **gekennzeichnet durch** einen wärmeschrumpfbaren Basiskörper (21, 31, 41, 51) und einen hinsichtlich seines Aggregatzustands stabilen Dichtkörper (22, 32, 42, 52), wobei der wärmeschrumpfbare Basiskörper (21, 31, 41, 51) den Dichtkörper (22, 32, 42, 52) beim Schrumpfen verformt und nach dem Schrumpfen in einem verformten Zustand hält.

2. Vorrichtung nach Anspruch 1, **dadurch gekennzeichnet, dass** der wärmeschrumpfbare Basiskörper (21, 31, 41) den Dichtkörper (22, 32, 42) in Axialrichtung desselben gesehen sandwitchartig aufnimmt, wobei der wärmeschrumpfbare Basiskörper (21, 31, 41) in Axialrichtung schrumpfbar ist und beim Schrumpfen den Dichtkörper (22, 32, 42) derart verformt, dass in Radialrichtung eine Dichtfunktion bereitgestellt wird.

3. Vorrichtung nach Anspruch 2, **dadurch gekennzeichnet, dass** hierbei die Dichtfunktion nach radial außen und/oder nach radial innen bereitgestellt wird.

4. Vorrichtung nach Anspruch 1, **dadurch gekennzeichnet, dass** der wärmeschrumpfbare Basiskörper (51) in Radialrichtung desselben gesehen sandwitchartig im Dichtkörper (52) aufgenommen ist, wobei der wärmeschrumpfbare Basiskörper (51) in Axialrichtung und/oder Radialrichtung schrumpfbar ist und beim Schrumpfen den Dichtkörper (52) derart verformt, dass in Radialrichtung eine Dichtfunktion bereitgestellt wird.

5. Vorrichtung nach Anspruch 4, **dadurch gekennzeichnet, dass** beim Schrumpfen in Axialrichtung die Dichtfunktion nach radial außen und nach radial innen bereitgestellt wird.

6. Vorrichtung nach Anspruch 4, **dadurch gekennzeichnet, dass** beim Schrumpfen in Radialrichtung die Dichtfunktion nach radial innen bereitgestellt wird.

7. Vorrichtung nach einem der Ansprüche 1 bis 6, **dadurch gekennzeichnet, dass** der Dichtkörper (22, 32, 42, 52) aus einem elastisch verformbaren Werkstoff oder einem plastisch-elastisch verformbaren Werkstoff oder einem plastisch verformbaren Werkstoff hergestellt ist.

8. Kabelmuffe nach einem der Ansprüche 1 bis 7, **dadurch gekennzeichnet, dass** der Dichtkörper (22, 32, 42, 52) aus einem Elastomer hergestellt ist.

9. Kabelmuffe nach einem der Ansprüche 1 bis 8, **dadurch gekennzeichnet, dass** der Dichtkörper (22, 32, 42, 52) aus einem Polyurethangel hergestellt ist.

10. Kabelmuffe nach einem der Ansprüche 1 bis 8, **dadurch gekennzeichnet, dass** der Dichtkörper (22, 32, 42, 52) aus einem Silikongel hergestellt ist.
